# EUROPÄISCHE PATENTANMELDUNG

(11) **EP 0 711 796 A1**
(43) Veröffentlichungstag der Anmeldung: **15.05.1996**
(21) Anmeldenummer: 95116407.8
(22) Anmeldetag: 18.10.1995
(51) Int. Cl.: C08J 5/24, B29C 53/80, B29B 15/14

(54) **Verfahren zur Herstellung von Wickelkörpern**

(30) Priorität: 28.10.1994 DE 4438576
(71) Anmelder: BASF AKTIENGESELLSCHAFT, D-67056 Ludwigshafen (DE)
(72) Erfinder: Gerth, Dale, Dr., D-67346 Speyer (DE); Schwiegk, Stefan, Dr., D-67433 Neustadt (DE); Möbius, Karl-Heinz, Dr., D-69126 Heidelberg (DE); Wilhelm, Heinz, D-67454 Hassloch (DE); Folda, Thomas, Dr., D-67435 Neustadt (DE)

(57) **Zusammenfassung**

Die Erfindung betrifft ein Verfahren zur Herstellung von rotationssymmetrischen Hohlkörpern durch Wickeln von harzgetränkten Faserbündeln um einen Kern und anschließendes Härten des Harzes, wobei als Harze ungesättigte Polyesterharze, Vinylesterharze oder Vinylesterurethanharze eingesetzt werden, die als Comonomere mindestens 5 Gew.-% tert.-Butylstyrol enthalten.

## Beschreibung

Die Erfindung betrifft ein Verfahren zur Herstellung von rotationssymetrischen Hohlkörpern. Diese werden üblicherweise dadurch hergestellt, daß man ein harzgetränktes Faserbündel (Roving) um einen Kern wickelt bzw. an einen rotierenden Kern anlegt und anschließend das Harz härtet. Als Reaktionsharze werden vielfach ungesättigte Polyesterharze eingesetzt; für Hohlkörper, die eine höhere Temperaturbeständigkeit aufweisen sollen, verwendet man auch Vinylesterharze (Epoxymethacrylate) oder Vinylesterurethanharze (Urethanmethacrylate).

Diese Harze enthalten stets Styrol als Comonomer. Beim Wickeln verdunsten aber größere Mengen dieser Substanz, was zu starker Geruchsbelästigung führt. Behördliche Auflagen machen aufwendige Absauganlagen notwendig. Darüberhinaus weisen Wickelkörper aus styrolhaltigen Harze eine für manche Anwendungen zu hohe Wasseraufnahme und zu geringe Hydrolysebeständigkeit auf.

Für andere Anwendungszwecke hat man auch schon vorgeschlagen, Styrol durch andere Comonomere, beispielsweise durch hochsiedende Methacrylsäureester zu ersetzen. Entsprechende emissionsarme Reaktionsharze, insbesondere mit ungesättigten Polyestern, härten jedoch nicht vollständig aus, so daß daraus hergestellte Wickelkörper keine klebfreie Oberfläche aufweisen; außerdem leidet die Chemikalienbeständigkeit beim Ersatz von Styrol durch Methacrylsäureester.

Der Erfindung lag daher die Aufgabe zugrunde, ein Reaktionsharz für die Herstellung von rotationssymmetrischen Hohlkörpern bereitzustellen, welches emissionsarm ist und im ausgehärteten Zustand abgewogen gute Eigenschaften aufweist, so daß Wickelkörper mit guter Wasser-, Korrosion- und Chemikalienbeständigkeit sowie klebfreier Oberfläche hergestellt werden können. Dabei sollte das Styrol wenigstens teilweise durch ein emissionsarmes Comonomer ersetzt werden, und das Harz sollte eine verhältnismäßig niedrige Viskosität aufweisen.

Es wurde nun gefunden, daß diese Aufgabe gelöst wird, wenn man als Comonomer tert.-Butylstyrol verwendet. Gegenstand der Erfindung ist demzufolge ein Verfahren zur Herstellung von rotationssymetrischen Hohlkörpern durch Wickeln von harzgetränkten Faserbündeln um einen Kern und anschließendes Härten des Harzes, dadurch gekennzeichnet, daß das Harz ein ungesättigtes Polyesterharz, ein Vinylesterharz oder ein Vinylesterurethanharz ist, welches mindestens 10 Gew.-% tert.-Butylstyrol enthält.

Tert.-Butylstyrol wird in einigen Patentveröffentlichungen (beispielsweise in EP-A 301 268) neben Styrol und anderen substituierten Styrolen in einer Liste von geeigneten Comonomeren für Reaktionsharze aufgeführt. Es ist jedoch nirgends als geeignetes Comonomer für emissionsarme Wickelharze differenziert oder beispielhaft beschrieben.

Als Reaktionsharze sind ungesättigte Polyester, Vinylester- und Vinylesterurethan-Harze und deren Mischungen geeignet.
1. Ungesättigte Polyester A sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Cyclohexandiol-1,2, 2,2-Bis-(p-hydroxycyclohexyl)-propan, Trimethylolpropanmonoallylether oder Butendiol-1,4. Bevorzugt sind Ethylenglykol, Diethylenglykol, Neopentylglykol, Propylenglykol, Dipropylenglykol und deren Mischungen.
   Ferner können ein-, drei- oder höherwertige Alkohole, wie z.B. Ethylhexanol, Fettalkohole, Benzylalkohole, 1,2-Di(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.
   Geeignete Carbonsäuren bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid, Fumarsäure, o-Phthalsäureanhydrid und Terephthalsäure
   Das Molverhältnis von ungesättigten zu gesättigten Dicarbonsäuren liegt vorzugsweise zwischen 1:0 und 1:2,5.
   Geeignet sind auch ungesättigte Polyester mit vorzugsweise endständigen Doppelbindungen. Solche ungesättigten Polyester können beispielsweise durch Umsetzung eines Polyesters mit Glycidylmethacrylat erhalten werden.
   Die ungesättigten Polyester besitzen Säurezahlen von 0,5 bis 100, vorzugsweise von 2 bis 50 und mittlere Molekulargewichte von ungefähr 800 bis 6000, vorzugsweise von etwa 1000 bis 4000.
   Die ungesättigten Polyester werden im allgemeinen durch Schmelzkondensation oder Kondensation unter azeotropen Bedingungen bei Temperaturen zwischen 150 und 220°C aus ihren Ausgangskomponenten nach kontinuierlichen oder diskontinuierlichen Verfahren hergestellt.
   Ebenfalls geeignet sind ungesättigte Polyester, die mit Cyclopenten- oder Cyclohexengruppen modifiziert sind.
2. Ungesättigte Vinylesterharze (Epoxyacrylate) sind Additionsprodukte von Polyepoxiden mit ungesättigten Monocarbonsäuren, vorzugsweise Methacrylsäure. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.
   Kennzeichnend für diese Klasse der Vinylesterharze ist die Gruppe 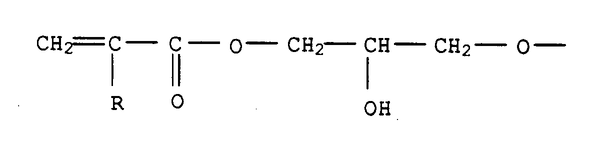 mit R=H oder CH₃.
   Eine andere Klasse von Vinylesterharzen sind Veresterungsprodukte von gegebenenfalls alkoxyliertem Bisphenol A mit (Meth)acrylsäure, z.B. nach EP-A 534 201.
3. Ungesättigte Vinylesterurethanharze (Urethanacrylate) weisen im allgemeinen folgende Gruppen auf:
   a) 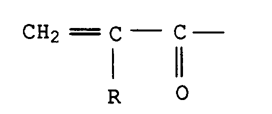 (mit R = H oder CH₃).
   b) 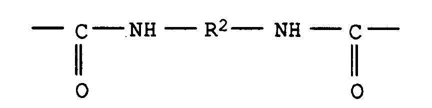 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
   c) - O - R³ - O -
      (mit R⁴ = aliphatischer, cycloaliphatischer oder aromatischer Rest mit 2 bis 100 C-Atomen).
   Vorzugsweise ist das Vinylesterurethanharz ein Umsetzungsprodukt aus
   - einem polyfunktionellen Isocyanat,
   - gegebenenfalls einem mehrwertigen Alkohol,
   - gegebenenfalls einem mehrwertigen Amin,
   - einem Hydroxyalkyl-(meth)acrylat,
   wobei bei der Umsetzung das Gewichtsverhältnis Isocyanat: (Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Die Reaktionsharze enthalten erfindungsgemäß mindestens 5, vorzugsweise 10 bis 50 Gew.-% tert.-Butylstyrol. Darunter sind p-tert.-Butylstyrol, m-tert.-Butylstyrol und deren Mischungen (vorzugsweise im Verhältnis 95 : 5) zu verstehen.

Das tert.-Butylstyrol kann auch im Gemisch mit anderen hochsiedenden Comonomeren eingesetzt werden, insbesondere mit (Meth-)Acrylsäureestern mit einem Siedepunkt oberhalb von 100, vorzugsweise oberhalb von 150°C. Es hat sich überraschenderweise gezeigt, daß Mischungen von ungesättigten Polyesterharzen mit (Meth)-Acrylsäureestern dann rasch und vollständig aushärten, wenn sie tert.-Butylstyrol zugemischt enthalten. Der Gehalt des Harzes an Methacrylsäureestern sollte weniger als 20, vorzugsweise 5 bis 15 Gew.-% betragen.

Bevorzugt sind Methacrylsäureester, wie z.B. 2-Ethylhexylmethacrylat, Phenylethylmethacrylat, Tetrahydrofurfurylmethacrylat, Ethyltriglykolmethacrylat, N,N-Dimethylaminoethylmethacrylat, N,N-Dimethylaminomethylmethacrylat, 1,4-Butandioldimethacrylat, Acetacarboxyalkylmethacrylat, 1,2-Ethandioldimethacrylat, Isobornylmethacrylat, Diethylenglykoldimethacrylat, Methoxypolyethylenglykolmonomethacrylat, Trimethylcyclohexylmethacrylat, Trimethylolpropantrimethacrylat, 2-Hydroxyethylmethacrylat, Hydroxypropylmethacrylat und Dicyclopentyloxyethylmethacrylat. Besonders bevorzugt ist Isobornylmethacrylat.

Acrylsäureester sind weniger bevorzugt, da sie meist hautreizend sind und eine geringe Hydrolysebeständigkeit ergeben.

Es soll nicht ausgeschlossen werden, daß das Harz untergeordnete Mengen Styrol enthält. Der Styrolgehalt sollte jedoch geringer als 20, vorzugsweise geringer als 15 Gew.-% sein und insbesondere 5 bis 13 Gew.-% betragen.

Das Reaktionsharz kann die üblichen Zusatzstoffe enthalten, wie Thixotropiermittel, Entlüfter, Inhibitoren, sowie die bekannten Polymerisationsinitiatoren und Beschleuniger für Warmhärtung bzw. Kalthärtung oder Lichthärtung.

Das Reaktionsharz sollte vorzugsweise eine Viskosität bei 23°C zwischen 100 und 2000, insbesondere zwischen 200 und 1500 mPa·s aufweisen.

Bei dem erfindungsgemäßen Verfahren werden Faserbündel, vorzugsweise übliche Glasfaserrovings mit einem Filamentdurchmesser von 2 bis 50 µm, durch ein Harzbad gezogen und dabei vollständig mit dem Harz getränkt. Anschließend werden die getränkten Rovings um einen Kern gewickelt bzw. sie werden an einen rotierenden Kern angelegt. Der Kern kann beheizt sein, wobei dann für die Heißhärtung geeignete Polymerisationsinitiatoren im Harz enthalten sein sollten. Bei unbeheizten Kernen werden kalthärtende Initiatorsysteme eingesetzt, hier kann es von Vorteil sein, eine Nachhärtung durch Erwärmen des Wickelkörpers, z.B. mit Heißluft vorzunehmen.

Das erfindungsgemäße Verfahren eignet sich zur Herstellung von Röhren für Wasser- und Gasleitungen, Heizöl-, Kraftstoff- und von Wassertanks, von Behältern für Chemikalien sowie von Anlageteilen für die chemische und petrochemische Industrie.

### Beispiel

1176 g (12 Mol) Maleinsäureanhydrid, 1510 g Phthalsäureanhydrid (10,2 Mol), 870 g Dipropylenglykol (6,5 Mol), 1505 g Neopentylglykol (14,5 Mol) und 0,373 g Hydrochinon wurden in ein Reaktionsgefäß eingewogen, das mit einem Thermometer, einem ständig arbeitenden Rührwerk und einer Vorrichtung zum Einleiten eines Stickstoffstromes ausgestattet war.

Die Mischung wurde langsam über 4 Stunden auf 200°C erhitzt und so lang dabei gehalten, bis die Säurezahl einer entnommenen Probe 70 mg KOH/g betrug.

Das Harz wurde auf 90°C abgekühlt und 27 g N,N-Dimethylbenzylamin und 2,2 g Di-tert.-butyl-4-methylphenol wurden zugegeben. 788 g (5,5 Mol) Glycidylmethacrylat wurden über 20 Min. zugetropft. Die Mischung wurde so lang dabei gehalten, bis die Säurezahl einer entnommenen Probe weniger als 10 mg KOH/g betrug.

55 Gew.-Teile dieses Harzes wurden in einer Monomermischung aus 23 Gew.-Teilen tert.-Butylstyrol, 10 Gew.-Teilen Styrol und 12 Gew.-Teilen Hydroxyethylmethacrylat bei 80°C gelöst und die Mischung wurde auf Raumtemperatur abgekühlt. Nach Zugabe von 2 Gew.-Teilen Methylethylketonperoxid und 1 Gew.-Teil Cobalt-Beschleuniger wurden mit dem Harz Silenko-Glasfaserrovings (EC 15 - 2400 tex) so getränkt, daß die Faserbündel einen Harzgehalt von 50 Gew.-% aufwiesen.

Diese Faserbündel wurden unter einem Winkel von 87° auf einen Edelstahl-Kern von 150 mm Durchmesser und 2 m Länge gewickelt, wobei die Längsbewegung des Kerns 1 m/min und die Drehbewegung der Form 80 U/min betrug.

Das entstehende Wickellaminat war luftblasenfrei, nach ca. 20 min setzte die Gelierung des Harzes ein. Während dieser Zeit verdunsteten nur 7 g/m² Styrol, während bei einem entsprechenden Harz, welches ausschließlich Styrol als Monomer enthält, in der gleichen Zeit 22 g Styrol verdunsten.

Nach einem Tag war das Harz ausgehärtet; das Laminat wies eine Barcol-Härte von 35 auf. Durch einen Nachhärteprozeß (24 h bei 120°C) wurde eine Barcolhärte von 55 erreicht.

## Patentansprüche

1. Verfahren zur Herstellung von rotationssymetrischen Hohlkörpern durch Wickeln von harzgetränkten Faserbündeln um einen Kern und anschließendes Härten des Harzes, dadurch gekennzeichnet, daß das Harz ein ungesättigtes Polyesterharz, ein Vinylesterharz oder ein Vinylesterurethanharz ist, welches mindestens 5 Gew.-% tert.-Butylstyrol enthält.

2. Verfahren nach Anspruch 1, dadurch gekennzeichnet, daß das Harz 10 bis 50 Gew.-% tert.-Butylstyrol enthält.

3. Verfahren nach Anspruch 1, dadurch gekennzeichnet, daß das Harz weniger als 20, vorzugsweise 5 bis 13 Gew.-% Styrol enthält.

4. Verfahren nach Anspruch 1, dadurch gekennzeichnet, daß das Harz weniger als 20, vorzugsweise 5 bis 15 Gew.-% eines Methacrylsäureesters enthält.

5. Verfahren nach Anspruch 1, dadurch gekennzeichnet, daß das Harz eine Viskosität zwischen 100 und 2000 mPa·s aufweist.
